# EUROPEAN PATENT SPECIFICATION

(11) **EP 1 778 542 B1**
(45) Date of publication and mention of the grant of the patent: **06.10.2010**
(21) Application number: 05770120.3
(22) Date of filing: 11.08.2005
(51) Int. Cl.: B64D 37/32, B64D 13/06

(54) **SYSTEM AND METHOD FOR COOLING OF AIR IN AN AIRCRAFT**
SYSTEM UND VERFAHREH ZUM KÜHLEN VON LUFT IN EINEM FLUGZEUG
SYSTEM ET PROCEDE POUR LE REFROIDISSEMENT D'AIR A BORD D'UN AERONEF

(30) Priority: 16.08.2004 DE 102004039669; 16.08.2004 US 602444 P
(43) Date of publication of application: 02.05.2007
(73) Proprietor: Airbus Operations GmbH, 21129 Hamburg (DE)
(72) Inventor: SCHERER, Thomas, 22559 Hamburg (DE); SCHMIDT, Rüdiger, 21717 Fredenbeck (DE); SOLNTSEV, Alexander, 22119 Hamburg (DE)
(74) Representative: Kopf, Korbinian Paul
(86) International application number: PCT/EP2005/008747
(87) International publication number: WO 2006/018225

(56) References cited:
- US-A- 3 847 298
- US-A1- 2004 065 383

## Description

This application claims the benefit of the filing date of United States Provisional Patent Application No. 60/602 444 filed August 16, 2004 and the German Patent Application No. 10 2004 039 669.8 filed August 16, 2004.

The present invention relates to the cooling of air in an aircraft. Cooling of air in an aircraft is known from US2004/0065383, which constitutes the closest prior art. In particular, the present invention relates to an air cooling device in an aircraft, as defined by the features of claim 1, a method for cooling the air in an aircraft, as defined by the feature of claim 12, the use (claim 10) of a corresponding air cooling device in an aircraft, as well as an aircraft (claim 11) comprising a corresponding air cooling device.

In aircraft, so-called on-board inert gas generation systems (OBIGGS), i.e. systems for generating inert gas in an aircraft, are used. These OBIGGS systems are for example used to generate nitrogen, which is used for displacing the oxygen from the fuel tanks. Cooled bleed air from engines or from auxiliary power units (APUs) is used as a source of air for generating inert gas. The hot bleed air, which has a temperature of approximately 200 °C, has to be cooled down to a particular temperature and has to be relaxed to a particular pressure. A conventional solution provides for an air-cooled heat exchanger in which the bleed air is cooled. The quantity of bleed air and the pressure are regulated with the use of a shut-off valve. For the purpose of cooling, external air is used, which when the aircraft is in flight is provided as ram air by the ram-air channel, while when the aircraft is on the ground is provided by an additional device (fan, jet pump). The temperature of the bleed air for the OBIGGS is regulated by means of a bypass valve and a temperature sensor.

To prepare the bleed air for the OBIGGS system, an air-cooled heat exchanger and a separate ram-air channel with the additional equipment of a fan or jet pump can be provided for ground operation. Providing the ram-air channel entails additional aircraft weight. Installing the ram-air channel in an existing aircraft can possibly be associated with enormous problems. Furthermore, the additional ram-air channel creates considerable aircraft resistance in flight Two additional openings (inlet and outlet of the ram-air channel) weaken the structure and thus require corresponding reinforcement and result in additional weight.

It is an object of the present invention to provide improved cooling of air in an aircraft.

The above object is met by means of an air cooling device in an aircraft, comprising a first bleed position, a first line and a second line, wherein, by way of the first bleed position, first cooling air can be bled from a first air conditioning unit. After completion of bleeding, by way of the first line the first cooling air can be fed for cooling supply air; and after completion of cooling, by way of the second line the supply air can be supplied to a system for generating inert gas.

By bleeding cooling air from the air conditioning unit, the supply of cooling air to the air cooling device can be ensured both in flight and on the ground. This does not necessitate a separate ram-air inlet channel, as a result of which both the overall weight of the aircraft is advantageously reduced, and the stability of the aircraft fuselage can be enhanced. Furthermore, by using cooling air from the air conditioning unit and by avoiding an additional ram-air inlet channel, additional air resistance that is caused by such ram-air inlet channels is avoided. Advantageously, the air cooling device according to the invention ensures more compact and easier installation in the aircraft.

According to a further aspect of the present invention, as stated in claim 2, the cooling of the supply air takes place in a heat exchanger. After bleeding took place and prior to cooling the supply air, the first cooling air has a first temperature. Prior cooling took place, the supply air has a second temperature, wherein the first temperature is lower than the second temperature.

By arranging the first bleed position in a ram-air channel of the air conditioning unit, advantageously the external air (ram air) used for cooling in the air conditioning unit can be used for cooling the supply air. Advantageously, cooling of the supply air takes place by means of a heat exchanger, as a result of which effective heat transfer is ensured.

According to a further aspect of the present invention, as stated in claim 3, the air cooling device further comprises an outlet channel, wherein after cooling took place the supply air, the first cooling air is drainable by way of the outlet channel, and wherein a passage of the outlet channel is controllable or regulable. Advantageously, it is thus possible, e.g. should it turn out during the flight that the necessary quantity of cooling air for the heat exchanger exceeds the supply of cooling air, to further open the passage of the outlet channel so that the throughput of cooling air increases.

According to a further aspect of the present invention, as stated in claim 4, the air cooling device further comprises a second bleed position, wherein by way of the second bleed position second cooling air can be bled from a second ram-air channel of a second air conditioning unit After bleeding took place and prior to cooling the supply air, the second cooling air has a third temperature, wherein the third temperature is lower than the second temperature. Furthermore, after bleeding took place, the first cooling air can be mixed with the second cooling air, and, after mixing took place can be used for cooling the supply air.

Advantageously, redundancy in relation to the preparation of cooling air is thus ensured. Even if one of the two bleed positions (or the associated pipelines or valves or the like) should fail, adequate supply of cooling air to the heat exchanger can take place by way of the corresponding other bleed position. This considerably improves safety of on-board operations.

According to a further aspect of the present invention, as stated in claim 5, the air cooling device further comprises a first valve, wherein by way of the first valve an overall quantity of supply air is controllable or regulable.

Advantageously, by way of the first valve, shutoff of the air supply to the OBIGGS system can occur so that for example during a malfunction of the heat exchanger a flow of very hot air (supply air) to the OBIGGS system can be stopped. This significantly increases the safety of on-board operations.

According to a further aspect of the present invention, as stated in claim 6, the air cooling device further comprises a temperature sensor, by way of which a fourth temperature is measurable. The fourth temperature corresponds to the temperature of the supply air after cooling took place.

Continuous monitoring of the supply air temperature behind the heat exchanger or after cooling took place advantageously ensures that undesirable changes in the temperature of the supply air can be taken into account, or that such temperature changes can be countered by corresponding regulating mechanisms or control mechanisms. For example, the temperature sensor can be designed so as to be redundant.

According to a further aspect of the present invention, as stated in claim 7, the air cooling device further comprises a second valve and a bridge of the heat exchanger, wherein passage across the bridge is controllable or regulable by way of the second valve.

For example, the bridging or bypassing of the supply air according to this invention can correspondingly be regulated by way of the second valve so that in this way regulation of the temperature of the supply air behind the heat exchanger is possible. In this way it is for example possible to effect temperature regulation without having to intervene directly in the cooling circuit of the heat exchanger.

According to a further aspect of the present invention, as stated in claim 8, the air cooling device further comprises a first controller, wherein the first controller controls or regulates the first valve or the second valve, or measures the fifth temperature by way of the first temperature sensor.

Advantageously, electronic control or regulation of the valves, or electronic monitoring of the temperature, make possible effective, quick and precise access to important parameters of the cooling circuit, such as for example the total throughput quantity of supply air or the air quantity which passes the heat exchanger without being cooled by it

According to a further aspect of the present invention, as stated in claim 9, the air cooling device comprises at least one component from the group consisting of a second controller, a second temperature sensor, and a third valve. In this connection the first controller is of a design which differs from that of the second controller, wherein if the first controller fails, the second controller takes over the function of the first controller. If the first temperature sensor fails, the second temperature sensor takes over the function of the first temperature sensor, and if the first valve fails, the third valve takes over the function of the first valve.

This means that even in the case of a crisis situation on board the aircraft, as can occur for example if one or several systems fail, based on the controller redundancy, which is for example reflected in incorporating several controllers of different design, each controller at a different location, and due to the redundancy of the control valves or regulating valves and of the temperature sensors, a reliable cooling of the supply air and corresponding regulating or controlling of the supply of supply air to the OBIGGS system is ensured.

According to a further embodiment of the present invention, as stated in claim 12, a method for cooling air in an aircraft is stated. The method comprises bleeding a first cooling air from a ram air channel of a first air conditioning unit by way of a first bleed position; cooling supply air by the first cooling air; and, after cooling took place, feeding the supply air to a system for generating inert gas. Advantageously, a method is thus stated which provides cooling of supply air for an OBIGGS system without the need for an additional ram-air inlet channel. To this effect, additional air resistance of the aircraft is avoided, and disadvantageous weakening of the aircraft structure as a result of the additional ram-air inlet channel is prevented.

Further advantages of the invention are stated in the dependent claims.

Below, preferred embodiments of the present invention are described with reference to the figures.
Fig. 1 shows a diagrammatic representation of an air cooling device or air supply device.
Fig. 2 shows a diagrammatic representation of an air conditioning unit.
Fig. 3 shows a diagrammatic representation of an air cooling device according to an embodiment of the present invention.

In the following description of the figures, the same reference signs are used for identical or similar elements.

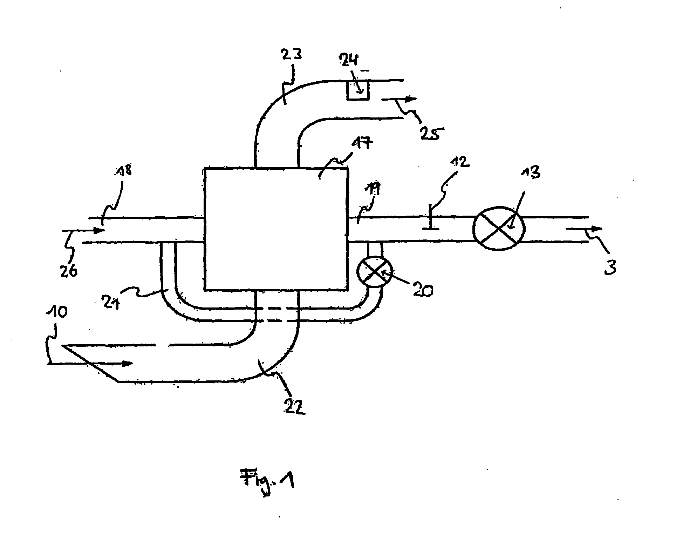

Fig. 1 shows a diagrammatic representation of an air cooling device. The air cooling device is in particular used for cooling the bleed air 26 for the OBIGGS system (not shown in Fig. 1). The device essentially comprises a heat exchanger 17, which cools down the bleed air 26 fed to the system.

Bleed air 26 is provided by engines or auxiliary power units (APUs). Typically, the temperature of the bleed air or supply air 26 is approximately 200 °C, which temperature is reduced in the heat exchanger 17. To this effect the bleed air 26 is fed to the heat exchanger 17 by way of the inlet line 18, is cooled down and is subsequently fed to the OBIGGS as an air stream 3 by way of line 19. The heat exchanger 17 is air-cooled. In this arrangement air cooling takes place by cooling air 10, which is conveyed by way of the ram-air channel 22 and 23. Furthermore, for ground operation a jet pump or a fan 24 is provided so that a corresponding throughput of cooling air is ensured. Subsequently, the cooling air 25 is channelled to the environment.

A temperature sensor 12 is provided for monitoring the bleed air 26 cooled in the heat exchanger. Furthermore, by way of a safety device a shut-off valve 13 is provided by means of which the flow 3 of bleed air to the OBIGGS can be stopped. Furthermore, the heat exchanger can be bypassed by way of the pipeline 21 and the bypass valve 20 so that temperature regulation becomes possible.

The quantity of bleed air and the pressure are controlled by means of the valve 13. The presence of the separate heat exchangers 17 and of the ram-air channel 22, 23 results in additional weight of the aircraft. Installation of the separate heat exchangers 17 and the ram-air channel 22, 23 in an existing aircraft can be associated with enormous problems. The additional ram-air channel 22, 23 causes additional aircraft resistance in flight Two additional openings (inlet and outlet of the ram-air channel) weaken the structure and might require corresponding reinforcement, thus resulting in additional weight Furthermore, the additional heat exchanger 17 involves additional maintenance effort.

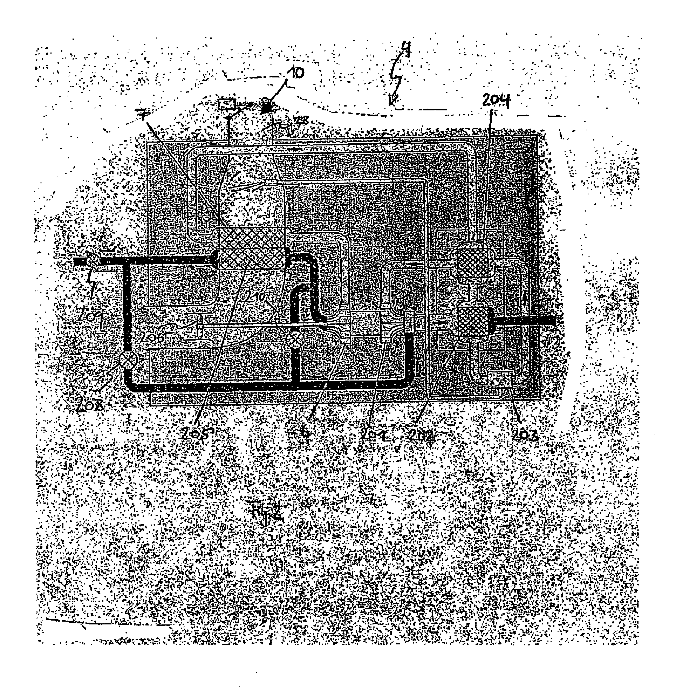

Fig. 2 is a diagrammatic representation of an air conditioning unit 4 which can be used for bleeding cooling air through an air cooling device according to the invention. As shown in Fig. 2, the air conditioning unit 4 (pack) of the aircraft's air generation system (AGS) comprises a cooling circuit with a compressor 6, a turbine 201, a condenser 202, a water separator 203, a reheater 204, a main heat exchanger 7, a heat exchanger 205, so-called air-cycle machine fan 206 and several valves 208, 209,210.

The air generation system in the aircraft is used to generate fresh air that is used for pressurising and air conditioning the aircraft cabin and the cockpit. Bleed air from engines or from auxiliary power units is used as an air source for air generation. The hot bleed air, whose temperature is approximately 200 °C, is cooled and relaxed in the air generation system. External air, which during flight is provided as ram air 10 from the ram-air channel 28, and which on the ground is provided by the sir-cycle machine fan 206, is used for cooling. The air generation system AGS comprises two similar air conditioning units 4.

According to an embodiment of the present invention, within the air conditioning unit a position is provided at which bleeding of cooling air is possible. In this connection the temperature of the bled cooling air is lower than the temperature of the supply air to be cooled with it. For example, the first bleed position can be a ram-air channel 28 of the air conditioning unit 4.

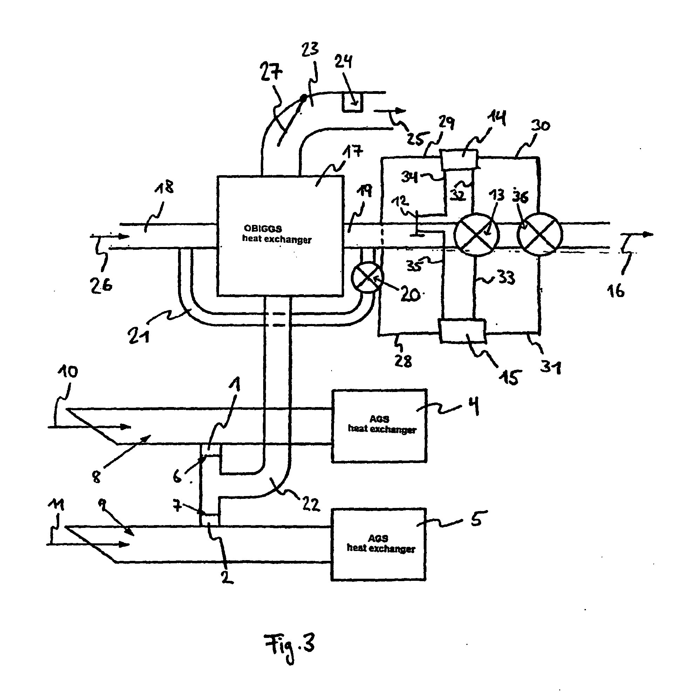

Fig. 3 is a schematic diagram of an air cooling device according to an embodiment of the present invention. As shown in Fig. 3, the air cooling device essentially comprises a first bleed position 1, a second bleed position 2, supply lines 18,19 and a heat exchanger 17. Of course further bleed positions can be provided, for example on further ram-air inlet channels 8, 9. In this way redundancy is further increased and thus the system's failure probability is reduced.

In this connection the first bleed position 1 of the air cooling device is arranged in or on a ram-air channel 8 of a first AGS heat exchanger or air conditioning unit 4, through which ram-air channel 8 cooling air 10 flows. The cooling air 10 is external air of a correspondingly low temperature. In contrast to this, the second bleed position 2 is arranged in or on the second ram-air channel 9 of the second AGS heat exchanger or air conditioning unit 5, through which ram-air channel 9 external air 11 flows.

Both bleed positions 1, 2 are brought together in pipeline 22 so that the bled cooling air can be fed to the heat exchanger 17. Supplying cooling air to the OBIGGS heat exchanger can be ensured both on the ground and during flight if at least one pack 4, 5 is switched on and operative, i.e. if at least one ram-air inlet channel 8, 9 is at least partly open. This requires a parallel branch-off 1, 2 of the cooling air of both ram-air channels 8, 9. The nonreturn valves 6, 7 installed in the branch lines 22 prevent the cooling air from flowing back should a ram-air channel 8, 9 remain closed in flight because of a fault. The quantity of cooling air can be unregulated. The ram-air inlet channels 8, 9 of the air conditioning units 4, 5, and the branch lines 22, can be dimensioned such that the necessary quantity of cooling air for the OBIGGS heat exchanger 17 is adequate under all flight conditions and operating conditions (of the AGS and of the OBIGGS). In this case the OBIGGS outlet channel 23 can be unregulated.

If it turns out that it is not possible to provide the necessary quantity of cooling air for the OBIGGS heat exchanger 17 under all flight conditions and operational conditions, the OBIGGS outlet channel 23 can be designed so as to be regulable. In this case the OBIGGS outlet channel 25 comprises a flap (or a valve or the like) 27, which, if the quantity of cooling air is adequate for the necessary temperature of the bleed air for OBIGGS to be achieved, is in an optimal fixed position, while, if the quantity of cooling air is not sufficient, said flap (or a valve or the like) 27 is extended or opened. By extending, the flap 27 generates greater negative pressure in the OBIGGS outlet channel 23 so that the pressure difference across the OBIGGS heat exchanger 17 rises and the throughput of cooling air increases.

By means of the additional device 24, which is a fan or a jet pump, adequate supply of cooling air 10, 11 to the heat exchanger 17 can be ensured on the ground.

Supply air 26, which is for example provided by engines or auxiliary power units, is fed to the heat exchanger 17 by way of pipeline 18. The following requirements apply to the bleed air that is provided to the OBIGGS system: depending on the aircraft type, a quantity of at least 0.01 to 0.12 kg per second has to be provided. The temperature is approximately 76 °C ± 6 °C, and the minimum pressure of the bleed air is approximately 1.7 bar (which is a relative pressure). Furthermore, for safety reasons the failure probability of the entire OBIGGS system (including air supply) must not be more than 10⁻⁴. A limiting value of 10⁻⁹ is provided for the so-called overheating probability (probability of the tank supply temperature exceeding 200 °C).

According to one embodiment of the present invention, these requirements are met by the overall system.

The temperature required of the cooled supply air 16 that is fed to the OBIGGS system is provided by way of the heat exchanger 17 and the bypass line 21 and the corresponding valve 20. In this way it is possible, by way of bypass 21, to admix non-cooled supply air to the cooled supply air that has exited from the heat exchanger 17 and is located in pipeline 19. This may for example be required if the temperature of the supply air in the pipeline 19 is below the temperature required by the OBIGGS system.

The temperature of the supply air in pipeline 19 is measured by way of the temperature sensor 12. Furthermore, valves 13, 36 are provided which control or regulate the total quantity of supply air which is fed to the OBIGGS system. To this purpose both the two valves 13, 36 and the temperature sensor 12 and the bypass valve 20 are connected to corresponding controllers 14, 15 by way of lines 28 to 35. In this connection the controllers 14, 15 control or regulate the valves 13, 20 and 36, and monitors the temperature sensor 12 and thus the temperature of the supply air in the pipeline 19.

In order to minimise the failure probability of the air cooling device, and/or to maximise the availability of the system, various redundancies are provided. For example, various air conditioning units 4, 5 can be provided to supply cooling air, or various valves 13, 36 can be provided for safe shut-off of the supply of air to the OBIGGS. Furthermore, apart from the nonreturn valves 6, 7, further nonreturn valves can be provided. Moreover, a further bypass 21 and a corresponding further valve 20 can be provided, so that even if one of the bypasses or one of the valves should fail, a further supply air bypass is available. Moreover, several temperature sensors 12 can be provided to further enhance system safety.

Regulating the temperature and the flow of the supply air takes place by means of two controllers 14, 15 of different design. In particular, the controllers 14, 15 can be accommodated at different locations in the aircraft so as to minimise the probability of both controllers being damaged at the same time. Should one of the two controllers 14, 15 fail, the respective other controller 15, 14 can take over the function of the failed controller.

The invention provides an advantage in that a more compact solution that is lighter in weight is provided for supplying the OBIGGS heat exchanger with cooling air. This does not require a separate ram-air inlet channel so that, in particular, weight is saved. Furthermore, the solution according to the invention results in a more compact installation in aircraft. Because there is no requirement for an additional ram-air inlet channel, additional aircraft resistance is avoided, and there is no installation-related weakening of the aircraft structure as a result of the ram-air inlet channel. Moreover, no additional reinforcements and additional weight, related therewith, are necessary.

Implementation of the invention is not limited to the preferred embodiments shown in the figures. Instead, a multitude of variants are imaginable which use the solution shown and the principle according to the invention even in the case of basically different embodiments.

In addition it should be pointed out that "comprising" does not exclude other elements or steps, and "a" or "one" does not exclude a plural number. Furthermore, it should be pointed out that characteristics or steps which have been described with reference to one of the above embodiments can also be used in combination with other characteristics or steps of other embodiments described above. Reference signs in the claims are not to be interpreted as limitations.

## Claims

1. An air cooling device for an aircraft, comprising:
a first bleed position (1);
a first line (22);
a second line (19);
wherein the first bleed position (1) is designed to bleed first cooling air from a first air conditioning unit (4);
wherein the first bleed position (1) is adapted to be arranged in or on a ram-air channel (8) of the first air conditioning unit (4);
wherein the first line (22) is designed, after bleeding took place, to supply the first cooling air for cooling supply air; and
wherein the second line (19) is designed, after cooling took place, to supply the supply air to a system for generating inert gas.

2. The air cooling device of claim 1,
wherein cooling of the supply air takes place in a heat exchanger (17);
wherein after bleeding took place and prior to cooling the supply air, the first cooling air has a first temperature;
wherein prior cooling took place, the supply air has a second temperature; and wherein the first temperature is lower than the second temperature.

3. The air cooling device of one of claims 1 or 2, further comprising:
an outlet channel (25);
wherein after cooling the supply air took place, the first cooling air can be let out by way of the outlet channel (25); and
wherein a passage of the outlet channel (25) is controllable or regulable.

4. The air cooling device of any one of the preceding claims, further comprising:
a second bleed position (2);
wherein by way of the second bleed position (2) second cooling air can be bled from a second ram-air channel (9) of a second air conditioning unit (5);
wherein after bleeding took place and prior to cooling the supply air, the second cooling air has a third temperature;
wherein the third temperature is lower than the second temperature; and
wherein after bleeding took place, the first cooling air can be mixed with the second cooling air, and after mixing took place can be used for cooling the supply air.

5. The air cooling device of any one of the preceding claims, further comprising:
a first valve (13);
wherein by way of the first valve an overall quantity of supply air is controllable or regulable.

6. The air cooling device of any one of the preceding claims, further comprising:
a first temperature sensor (12);
wherein by way of the first temperature sensor a fourth temperature is measurable; and
wherein the fourth temperature is the temperature of the supply air after cooling took place.

7. The air cooling device of any one of the preceding claims, further comprising:
a second valve (20);
a bridge (21) of the heat exchanger (17);
wherein passage across the bridge is controllable or regulable by way of the second valve (20).

8. The air cooling device of any one of the preceding claims, further comprising:
a first controller (14);
wherein the first controller (14)controls or regulates the first valve (13)or the second valve (20), or measures the fifth temperature by way of the first temperature sensor (12).

9. The air cooling device of claim 8, further comprising at least one component from the group consisting of:
a second controller (15);
a second temperature sensor;
a third valve (36);
wherein, when including a second controller, the first controller (14) is of a design which differs from that of the second controller (15);
wherein, when including a second controller, if the first controller (14) fails, the second controller (15) takes over the function of the first controller;
wherein, when including a second temperature sensor, if the first temperature sensor fails, the second temperature sensor takes over the function of the first temperature sensor; and
wherein, when including a third valve, if the first valve fails, the third valve takes over the function of the first valve.

10. The use of an air cooling device of any one of claims 1 to 9 in an aircraft.

11. An aircraft comprising an air cooling device of any one of claims 1 to 9.

12. A method for cooling air in an aircraft, comprising the steps:
bleeding a first cooling air from a ram-air channel of a first air conditioning unit by way of a first bleed position;
cooling supply air by the first cooling air; and
after cooling took place, feeding the supply air to a system for generating inert gas.

13. The method of claim 12, further comprising the steps:
bleeding a second cooling air from a ram-air channel of a second air conditioning unit by way of a second bleed position;
feeding the first bled cooling air and the second bled cooling air for cooling the supply air;
after cooling of the supply air took place, letting the first and second cooling air out by way of an outlet channel;
wherein the second bleed position is arranged in a ram-air channel of the second air conditioning unit; and
wherein cooling of the supply air takes place in a heat exchanger.

## Patentansprüche

1. Luftkühlungsvorrichtung für ein Flugzeug, umfassend:
eine erste Abzapfposition (1);
eine erste Leitung (22);
eine zweite Leitung (19);
wobei die erste Abzapfposition (1) ausgelegt ist, erste Kühlungsluft aus einer ersten Klimaanlageeinheit (4) abzuzapfen;
wobei die erste Abzapfposition (1) geeignet ist, in einem Stauluftkanal (8) der ersten Klimaanlageeinheit (4) angeordnet zu sein;
wobei die erste Leitung (22) ausgelegt ist, nach erfolgter Abzapfung, die erste Kühlungsluft zur Kühlung von Versorgungsluft zu liefern; und
wobei die zweite Leitung (19) ausgelegt ist, nach erfolgter Kühlung, die Versorgungsluft zu einem System zur Erzeugung von Inertgas zu liefern.

2. Luftkühlungsvorrichtung nach Anspruch 1,
wobei die Kühlung der Versorgungsluft in einem Wärmetauscher (17) erfolgt;
wobei die erste Kühlungsluft nach erfolgter Abzapfung und vor Kühlung der Versorgungsluft eine erste Temperatur aufweist;
wobei die Versorgungsluft vor erfolgter Kühlung eine zweite Temperatur aufweist; und
wobei die erste Temperatur niedriger ist als die zweite Temperatur.

3. Luftkühlungsvorrichtung nach einem der Ansprüche 1 oder 2, weiterhin umfassend:
einen Auslasskanal (25);
wobei die erste Kühlungsluft nach erfolgter Kühlung der Versorgungsluft durch den Auslasskanal (25) abgelassen werden kann; und
wobei ein Durchlass des Auslasskanals (25) steuerbar oder regelbar ist.

4. Luftkühlungsvorrichtung nach einem der vorhergehenden Ansprüche, weiterhin umfassend:
eine zweite Abzapfposition (2);
wobei durch die zweite Abzapfposition (2) von einem zweiten Stauluftkanal (9) einer zweiten Klimanlageeinheit (5) zweite Kühlungsluft abgezapft werden kann;
wobei die zweite Kühlungsluft nach erfolgter Abzapfung und vor Kühlung der Versorgungsluft eine dritte Temperatur aufweist;
wobei die dritte Temperatur niedriger ist als die zweite Temperatur; und
wobei nach erfolgter Abzapfung die erste Kühlungsluft mit der zweiten Kühlungsluft gemischt werden kann und nach erfolgter Mischung zur Kühlung der Versorgungsluft verwendet werden kann.

5. Luftkühlungsvorrichtung nach einem der vorhergehenden Ansprüche, weiterhin umfassend:
ein erstes Ventil (13);
wobei durch das erste Ventil eine Gesamtmenge an Versorgungsluft steuerbar oder regelbar ist.

6. Luftkühlungsvorrichtung nach einem der vorhergehenden Ansprüche, weiterhin umfassend:
einen ersten Temperatursensor (12);
wobei durch den ersten Temperatursensor eine vierte Temperatur messbar ist; und
wobei die vierte Temperatur die Temperatur der Versorgungsluft nach erfolgter Kühlung ist.

7. Luftkühlungsvorrichtung nach einem der vorhergehenden Ansprüche, weiterhin umfassend:
ein zweites Ventil (20);
eine Überbrückung (21) des Wärmetauschers (17);
wobei ein Durchgang über die Überbrückung durch das zweite Ventil (20) steuerbar oder regelbar ist.

8. Luftkühlungsvorrichtung nach einem der vorhergehenden Ansprüche, weiterhin umfassend:
eine erste Steuerung (14);
wobei die erste Steuerung (14) das erste Ventil (13) oder das zweite Ventil (20) steuert oder regelt oder die fünfte Temperatur durch den ersten Temperatursensor (12) misst.

9. Luftkühlungsvorrichtung nach Anspruch 8, weiterhin umfassend zumindest ein Bauteil ausgewählt aus der Gruppe bestehend aus:
einer zweiten Steuerung (15);
ein zweiter Temperatursensor;
ein drittes Ventil (36);
wobei bei einer bestehenden zweiten Steuerung die erste Steuerung (14) eine Bauart aufweist, die sich von der der zweiten Steuerung (12) unterscheidet;
wobei bei einer bestehenden zweiten Steuerung, falls die erste Steuerung (14) ausfällt, die zweite Steuerung (15) die Funktion der ersten Steuerung übernimmt;
wobei bei einem bestehenden zweiten Temperatursensor, falls der erste Temperatursensor ausfällt, der zweite Temperatursensor die Funktion des ersten Temperatursensors übernimmt; und
wobei bei einem bestehenden dritten Ventil, falls das erste Ventil ausfällt, das dritte Ventil die Funktion des ersten Ventils übernimmt.

10. Verwendung einer Luftkühlungsvorrichtung nach einem der Ansprüche 1 bis 9 in einem Flugzeug.

11. Flugzeug umfassend eine Luftkühlungsvorrichtung nach einem der Ansprüche 1 bis 9.

12. Verfahren zur Luftkühlung in einem Flugzeug, umfassend die Schritte:
Abzapfen einer ersten Kühlungsluft von einem Stauluftkanal einer ersten Klimanlageeinheit (4) über eine erste Abzapfposition (1);
Kühlen von Versorgungsluft durch die erste Kühlungsluft; und
nach erfolgter Kühlung Zuführen der Versorgungsluft zu einem System zur Erzeugung von Inertgas.

13. Verfahren nach Anspruch 12, weiterhin umfassend die Schritte:
Abzapfen einer zweiten Kühlungsluft von einem Stauluftkanal einer zweiten Klimanlageeinheit durch eine zweite Abzapfposition;
Zuführen der ersten abgezapften Kühlungsluft und der zweiten abgezapften Kühlungsluft zur Kühlung der Versorgungsluft;
Auslassen der ersten und zweiten Kühlungsluft nach erfolgter Kühlung der Versorgungsluft durch einen Auslasskanal;
wobei die zweite Abzapfposition in einem Stauluftkanal der zweiten Klimanlageeinheit (4) angeordnet ist; und
wobei die Kühlung der Versorgungsluft in einem Wärmetauscher erfolgt.

## Revendications

1. Dispositif de refroidissement d'air pour un avion, comportant :
une première position de prélèvement (1),
une première ligne (22),
une seconde ligne (19),
dans lequel la première position de prélèvement (1) est conçue pour prélever de l'air de refroidissement primaire provenant d'un premier groupe de conditionnement d'air (4),
dans lequel la première position de prélèvement (1) est adaptée pour être disposée dans ou sur un canal d'air dynamique (8) du premier groupe de conditionnement d'air (4),
dans lequel la première ligne (22) est conçue pour fournir, après que le prélèvement ait eu lieu, de l'air de refroidissement primaire afin de refroidir l'air d'alimentation, et
dans lequel la seconde ligne (19) est conçue pour fournir, après que le refroidissement ait au lieu, de l'air d'alimentation à un système destiné à produire du gaz inerte.

2. Dispositif de refroidissement d'air selon la revendication 1,
dans lequel le refroidissement de l'air d'alimentation a lieu dans un échangeur de chaleur (17),
dans lequel, après que le prélèvement ait eu lieu et avant le refroidissement de l'air d'alimentation, l'air de refroidissement primaire a une première température,
dans lequel, avant que le refroidissement ait eu lieu, l'air d'alimentation a une deuxième température, et
dans lequel la première température est inférieure à la deuxième température.

3. Dispositif de refroidissement d'air selon l'une des revendications 1 ou 2, comportant en outre :
un canal de sortie (25),
dans lequel, après que le refroidissement de l'air d'alimentation ait eu lieu, l'air de refroidissement primaire peut être évacué au moyen du canal de sortie (25), et
dans lequel un passage du canal de sortie (25) peut être commandé ou régulé.

4. Dispositif de refroidissement d'air selon l'une quelconque des revendications précédentes, comportant également :
une seconde position de prélèvement (2),
dans lequel, au moyen de la seconde position de prélèvement (2), de l'air de refroidissement secondaire peut être prélevé à partir d'un second canal d'air dynamique (9) d'un second groupe de conditionnement d'air (5),
dans lequel, après que le prélèvement ait eu lieu et avant le refroidissement de l'air d'alimentation, l'air de refroidissement secondaire a une troisième température,
dans lequel la troisième température est inférieure à la deuxième température, et
dans lequel, après que le prélèvement ait eu lieu, l'air de refroidissement primaire peut être mélangé avec l'air de refroidissement secondaire, et après que le mélange ait eu lieu, peut être utilisé pour refroidir l'air d'alimentation.

5. Dispositif de refroidissement d'air selon l'une quelconque des revendications précédentes, comportant de plus :
une première soupape (13),
dans lequel, au moyen de la première soupape, une quantité totale d'air d'alimentation peut être commandée ou régulée.

6. Dispositif de refroidissement d'air selon l'une quelconque des revendications précédentes, comportant en outre :
un premier capteur de température (12),
dans lequel, au moyen du premier capteur de température, une quatrième température peut être mesurée, et
dans lequel la quatrième température est la température de l'air d'alimentation après que le refroidissement ait eu lieu.

7. Dispositif de refroidissement d'air selon l'une quelconque des revendications précédentes, comportant également :
une deuxième soupape (20),
un pont (21) de l'échangeur de chaleur (17),
dans lequel un passage à travers le pont peut être commandé ou régulé au moyen de la deuxième soupape (20).

8. Dispositif de refroidissement d'air selon l'une quelconque des revendications précédentes, comportant de plus :
un premier dispositif de commande (14),
dans lequel le premier dispositif de commande (14) commande ou régule la première soupape (13) ou la deuxième soupape (20), ou mesure la cinquième température au moyen du premier capteur de température (12).

9. Dispositif de refroidissement d'air selon la revendication 8, comportant en outre au moins un composant parmi le groupe constitué de :
un second dispositif de commande (15),
un second capteur de température,
une troisième soupape (36),
dans lequel, lors de l'inclusion d'un second dispositif de commande, le premier dispositif de commande (14) est d'une conception qui diffère de celle du second dispositif de commande (15),
dans lequel, lors de l'inclusion d'un second dispositif de commande, si le premier dispositif de commande (14) tombe en panne, le second dispositif de commande (15) reprend la fonction du premier dispositif de commande,
dans lequel, lors de l'inclusion d'un second capteur de température, si le premier capteur de température tombe en panne, le second capteur de température reprend la fonction du premier capteur de température, et
dans lequel, lors de l'inclusion d'une troisième soupape, si la première soupape tombe en panne, la troisième soupape reprend la fonction de la première soupape.

10. Utilisation d'un dispositif de refroidissement d'air selon l'une quelconque des revendications 1 à 9 dans un avion.

11. Avion comportant un dispositif de refroidissement d'air selon l'une quelconque des revendications 1 à 9.

12. Procédé pour refroidir de l'air dans un avion, comportant les étapes consistant à :
prélever de l'air de refroidissement primaire à partir d'un canal d'air dynamique d'un premier groupe de conditionnement d'air au moyen d'une première position de prélèvement,
refroidir de l'air d'alimentation par l'intermédiaire de l'air de refroidissement primaire, et
après que le refroidissement ait eu lieu, acheminer l'air d'alimentation jusqu'à un système destiné à produire du gaz inerte.

13. Procédé selon la revendication 12, comportant également les étapes consistant à :
prélever de l'air de refroidissement secondaire à partir d'un canal d'air dynamique d'un second groupe de conditionnement d'air au moyen d'une seconde position de prélèvement,
acheminer l'air de refroidissement primaire prélevé et l'air de refroidissement secondaire prélevé pour refroidir l'air d'alimentation,
après que le refroidissement de l'air d'alimentation ait eu lieu, laisser l'air de refroidissement primaire et secondaire s'évacuer au moyen d'un canal de sortie,
dans lequel la seconde position de prélèvement est disposée dans un canal d'air dynamique du second groupe de conditionnement d'air, et
dans lequel le refroidissement de l'air d'alimentation a lieu dans un échangeur de chaleur.
